Europäisches Patentamt

(19) European Patent Office

Office européen des brevets

(11) Publication number : **0 454 477 A2**

# EUROPEAN PATENT APPLICATION

(21) Application number : 91303788.3

(51) Int. Cl.⁵ : **G06F 15/72**

(22) Date of filing : 26.04.91

(30) Priority : 26.04.90 US 514813

(43) Date of publication of application :
30.10.91 Bulletin 91/44

(84) Designated Contracting States :
**DE FR GB IT NL**

(71) Applicant : **E.I. DU PONT DE NEMOURS AND
COMPANY
1007 Market Street
Wilmington Delaware 19898 (US)**

(72) Inventor : **Trist, Alan Henry
P.O. Box 1398
Boulder Creek, California 95006 (US)**
Inventor : **Thomas, Bruce A.
130-C Market Street
Santa Cruz, California 95060 (US)**

(74) Representative : **Davies, Christopher Robert et
al
Frank B. Dehn & Co. Imperial House 15-19
Kingsway
London WC2B 6UZ (GB)**

(54) Image editing system.

(57)   An image editing system includes a drafting tool operable by an operator to designate picture elements on a desired image. The drafting tool (17 ;18,19) is adapted to be moved by the operator from a first position in the image to a second position also in the image. The system has a shape selection library (12) coupled to the drafting tool (17 ;18,19) for providing electronic shape signals having different values and representing a plurality of picture elements to simulate a characteristic of the drafting tool (17 ;18,19). A signal changing processor (11) is coupled to the shape signal providing means (12) for changing the shape signals in response to the movement of the drafting tool (17 ;18,19) from the first position to the second position, the signal changing processor (11) being coupled to input signals preselected by the operator from a library of available selectable instructions.

EP 0 454 477 A2

# FIG.1

This invention pertains to electronic image creation and display and, more particularly, to a method and associated apparatus for the on screen generation of special effects such as simulation of an artist's paint brush, in creating or editing an image.

It is well known to use a drafting tool on a tablet to produce an image which is displayed on a video display screen. It is also well known to provide circuitry associated with the display screen and/or the drafting tool to simulate on the display screen the effect of different drafting or painting tools in an effort to imitate electronically the real life effects that an artist's tool produces on a traditional drafting medium. Thus, technology exists today which as a result of moving a drafting tool across a tablet, will generate on a display screen a line whose width may cover a number of picture elements,i.e., pixels, and which may vary in intensity along its edges, in a simulation of a pencil line or a brush line drawn on a sheet of paper. The technology also exists today whereby lines drawn by the drafting tool may be written over information already existing on the screen and, in the process, either overwrite the new information, or blend the new information with that already existing in the display, the degree of blending being variable in proportions selected by the operator. U. S. Patent No. 4,514,818 discloses a versatile such system which permits one to produce on a display screen realistic simulations of a draftsman's pencil line on a drawing, as well as successful imitations of the effect of an artist's brush.

The technology to date appears to focus in providing accurate simulations on electronic display screens of the effect of known artist's tools. As a result, the inventive efforts have been directed to study and duplicate the shape and manner of building up of the paint of air brushes, paint brushes, pencils of various hardness and the like, rather than viewing the electronic medium itself as an artistic tool with its own capabilities. Yet the artist working in this new electronic canvas has needs differing subtly from the needs of the artist working on traditional media with traditional tools.

The prior art does not address these subtleties, and thus fails to exploit the full potential of electronic image creation, modification, and display. It is an object of the present invention to supply additional tools to the creative artist to better assist him in creating new images or in editing old ones, which tools are better adapted to digital image processing techniques.

The present invention comprises an image editing system which includes a drafting tool operable by an operator to designate picture elements on a desired image. The drafting tool is adapted to be moved by the operator from a first position in the image to a second position also in the image. The system has a shape selection library coupled to the drafting tool for providing electronic shape signals having different values and representing a plurality of picture elements to simulate a characteristic of the drafting tool. A signal changing processor is coupled to the providing means for changing the shape signals in response to the movement of the drafting tool from the first position to the second position, the signal changing processor being coupled to input signals preselected by the operator from a library of available selectable instructions.

Embodiments of the invention will now be described, by way of example only, with reference to the accompanying drawings, in which:

Figure 1 is a functional block diagram representing an embodiment of the present invention;

Figure 2 represents the effect of moving the drafting tool between a first, second, third and fourth position on an image, on the surrounding image points, when the operator selected instructions define a random brush pattern;

Figure 3 represents the effect of moving the drafting tool between a first, second, third and fourth position on an image, on the surrounding image points, when the operator selected instructions define a limited random brush pattern with a randomness level equal to 2:

Figure 4 represents the effect of moving the drafting tool between a first, second, third and fourth position on an image, on the surrounding image points, when the operator selected instructions create a dither brush pattern effect;

FIGS. 5a through 5d represent the effect of moving the drafting tool between a first, second, third and fourth position on an image, on the surrounding image points, when the operator selected instructions are used to generate a gradual buildup of image density as a function of distance from the initial point.(Attack effect);

FIGS. 5e and 5f show the pixel intensity profiles along the X and Y direction corresponding to the different positions shown in FIGS. 5a through 5d;

FIG.6 shows the brush pattern of a brush created on the basis of operator instructions creating a spatter effect; and

FIGS. 7 and 8 show the intensity profiles corresponding to image points encompassed by the brush described in FIG. 6, in views taken along sections"AA" and "BB", respectively.

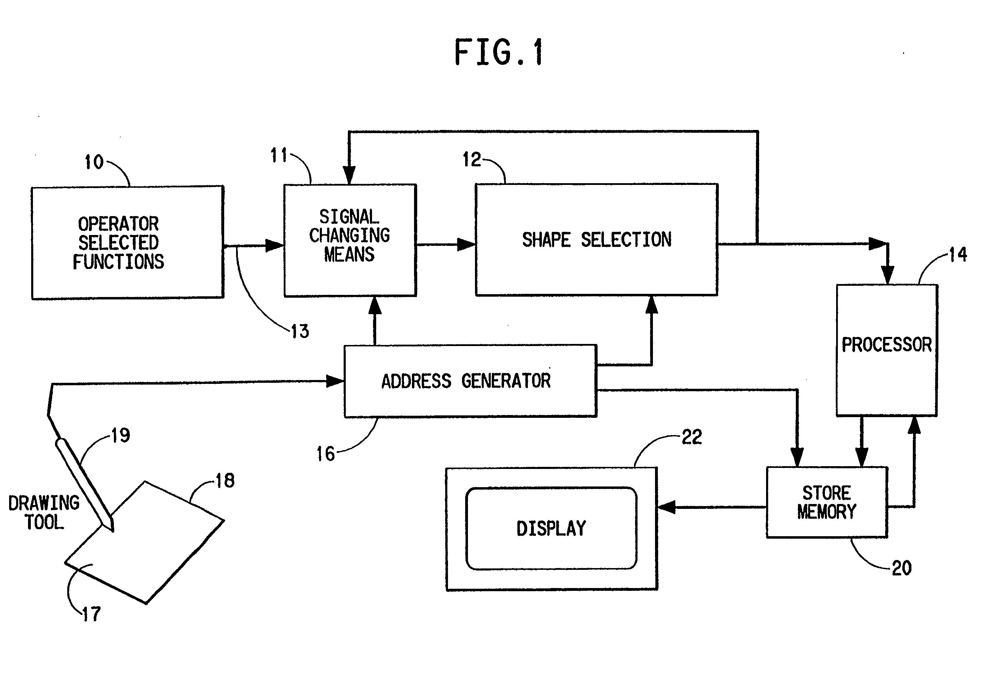

FIG. 1 shows an overall functionally depicted system adequate to practice the method of the present invention. The system comprises a drawing tool 18, which in turn comprises an electronic tablet 17 and a movable stylus 19. The drawing tool 18 is connected to an address generator 16 which serves to provide an electronic signal indicative of the position of the stylus 19 on the tablet 17. This position of the stylus 19 may then be related to an X-Y or other coordinate system to provide an indication of the position of the stylus 19 on a particular picture point of a picture being displayed on an associated display monitor 22.

The system of FIG. 1 further comprises a shape selection means 12 which includes a library of brush shapes to be used in generating an image or in retouching an image that has been created at a previous time either locally or at a remote location, and which is stored and made available to the store memory 20 for display through well known means not relevant to the present invention and therefore not shown in FIG. 1 . The shape selection means 12 provides electronic shape signals having different values and representing a plurality of picture elements to simulate a characteristic of the drawing tool 18.

The shape selection means 12 is connected to signal changing means 11 which changes the shape signals in response to the movement of the drafting tool 18 from a first position to a second position in the image. The signal changing means 11 receives input signals 13 preselected by the operator from a keyboard or similar operator input device 10, which allows an operator to communicate with the shape selection means and select the electronic shape signals that will be used in a particular operation to create the desired brush effect. Menu display means are provided to permit the operator to select from a displayed menu of brush patterns and effects,a desired brush pattern and effect combination. A library of patterns and effects is stored in the shape selection module 12. This may be a collection of look-up tables which can supply preselected values to the signal changing means 11 for use in modifying the value of a given picture point or element ( Pixel), or it may take the form of a collection of special effect algorithms which can be called to operate upon any given picture element in the signal changing means 11. Combinations of the two are also possible. Finally operators may be included in the shape selection module which enable the duplication in the brush pattern of any section of a preexisting image.

The output of the shape selection module 12 is a set of instructions to the processor module 14. This set of instructions for each point on the image as identified by the location of the stylus 19, defines a shape signal representing the brush effect at that point. The shape signal comprises a brush pattern, which consists of a batch of image points, i.e., a number of pixels, and an intensity level which determines each pixel intensity within the brush pattern. The shape signal has also associated therewith instructions on how to combine the intensity level in the shape signal with any preexisting intensity level in each of the pixels within the brush pattern. Such combination, for instance may comprise mixing the two intensity level signals in proportion to their intensity, or in any proportion desired, including the limiting case where zero per cent of one signal is mixed with a hundred percent of the other resulting in complete transparency effect or in complete overwrite as the case may be.

The shape signal may include image information from the same area of the image as displayed, or from a different area than the one displayed, or image information from a preselected image area.

The output of the processor 14 is placed in a store memory 20 which may be a separate memory or may be the video memory itself. The shape selection module 12, the processor 14 and the store and/or video display memory 20 are all addressed in synchronization using a synchronizing output signal from the address generator 16.

Shape selection module 12, processor 14, store memory 20 and display unit 22 may all be part of a personal computer such as a Macintosh II, or a dedicated computer with faster processor and larger memory may be used.

As discussed briefly above, the shape selection module 12 together with the operator input device 10 allows the operator to select a brush pattern and effect from a menu typically displayed on the display means. It is preferred that the selection menu be of the "pop up" or "window" type so that after the selection is completed it may be removed from view to permit unobstructed view of the screen.

In one embodiment, the menu will include a number of brush pattern possibilities, i.e. triangular, circular, square, polygon or random. In a preferred embodiment, the operator has the ability to define the brush pattern in any way he chooses, using either preselected shapes or by creating his own. Using any of the known techniques for image shape manipulation, once a pattern is selected, the operator may display it on the screen, and expand it, reduce it, rotate it and move it around at will, using either device 10 controls, or the drafting tool 18 to place a pointer on selected portions of the display screen.

Again using a screen menu, the operator will determine the effect of the brush. The operator may select the degree of mixing of the intensity level of the brush pixels with the preexisting pixel values. The preexisting values may derive from the pixels within the brush pattern, from pixels from a different image area or even from precomputed data. The initial shape signal of the brush will be selected, i.e., both the pattern and the intensity profile of the pixels within the pattern. The manner of change of the shape signal as the drafting tool moves from one point on the image to a second point and so on is also selected. The degree of randomness change in the shape signal, as will be described in further detail below, is determined, should the operator select a quasi random shape, and whether dither, spatter, whisking, texturing, masked brushing, blurring, sharpening or other special effects are to be used.

By combining certain of the above effects, the operator may create his own drafting tool, taking full advantage of the abilities of the electronic medium, unrestricted by the limitations of the conventional paint or air brushes.

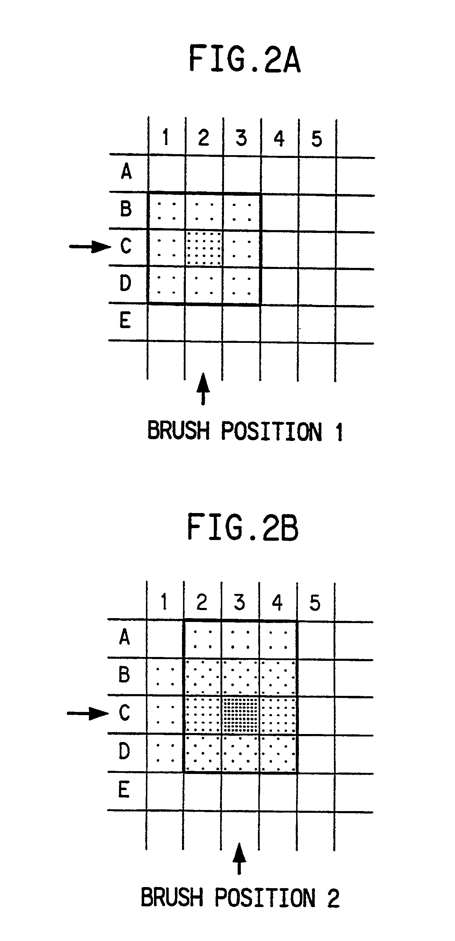

For instance, random variations of the brush shape, both in the pattern and the intensity level may be used, as shown in FIGS. 2a through 2d. For simplicity, the image background in the brush vicinity is shown as having a constant intensity level, specifically such level as would correspond to plain white in a case where white is the display background. The position of each pixel is identified by two alpha numeric characters, a number and a letter. In position 1, the drafting tool stylus 19 is placed at a point on the image corresponding to pixel C2. The initial pattern is a square comprising pixels B1, B2, B3, C1, C2, C3, D1, D2, and D3, having the following intensity levels respectively: 10, 10, 10, 10, 20, 10, 10, 10, and 10. A simple addition of the preexisting pixel value and the new pattern value intensity level shall be used in this example, although it is understood that other mixing may be used, including mixing algorithms that exhibit variation as the tool moves from point to point, as well as pixel to pixel within a given pattern.

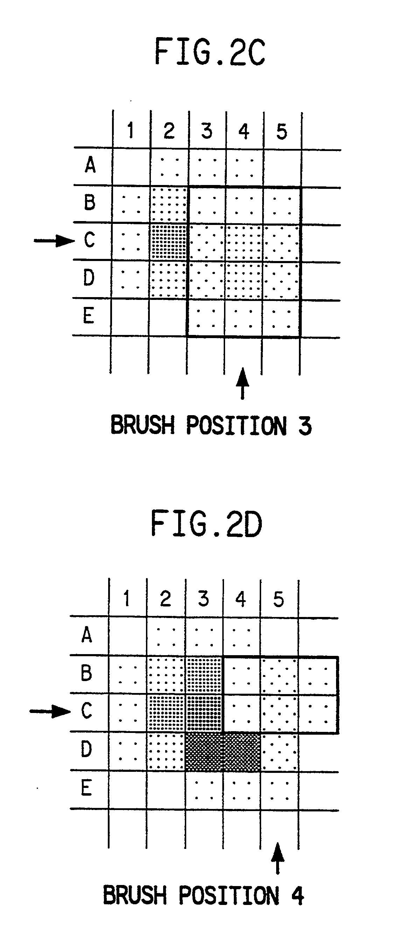

As the operator moves the tool from position 1 to position 2, the aforementioned intensity values are stored in the store memory in the locations corresponding to or identified as those of the image points on the image and the display. A random shape has been selected, which is preferably delimited somewhat so that the pattern and intensity values are weighed toward the stylus location. The new shape shown in FIG. 2b, position 2, shows a brush pattern comprising the following pixels and intensity values: A2/10, A3/10, A4/10, B2/20, B3/20, B4/20, C2/30, C3/50, C4/30, D2/20, D3/20 and D4/20. Pixels B1, C1, and D1 show intensity levels of 10 because of the brush effect when in position 1. Pixels B2, B3, C2, C3, D2, and D3 also have intensity values due to the previous passage of the pattern, and these values will be combined with the new pattern values. As shown in FIG. 2c, position 3 diagram, B2 has an intensity value of 20+10 which equals 30, C2 has a value of 30+20=50, and D2=30. Furthermore A2, A3, And A4 have values of 10, while the drafting tool shape signal has again changed in a random fashion, this time to include the following pixels and values: B3/10, B4/10, B5/10, C3/20, C4/30, C5/20, D3/20, D4/30, D5/20, E3/10, E4/10, E5/10.

When the tool 19 moves to the next position 4, shown in FIG. 2d, it leaves behind the following pixels and values: B1, C1, and D1, are unchanged, equal to 10. So are A2, A3, and A4, also equal to 10. B2, C2 and D2 are also unchanged, with values of 30, 50, and 30 respectively. B3 is now equal to 10+20+10=40, C3 equals 10+50+20=80, and D3 equals 50. D4 equals 20+30=50 and D5=20. E3, E4, and E5 are all 10, and the new shape signal has a pattern covering pixels B4, B5, B6, C4, C5, and C6, with intensity levels of 10, 20, 10, 10, 20, and 10 respectively. The process continues until the drafting tool is stopped, the shape signal randomly changing as a function of the position change of the stylus.

As a result of the above, a better blending of the new image created with a preexisting image is possible because the new image has non distinct edges as a result of the random variations in the degree of mixing of the new and the old, especially since the new image coverage keeps changing in an unpredictable manner. The lack of a defined line pattern makes it much more difficult for the human eye to detect the alteration.

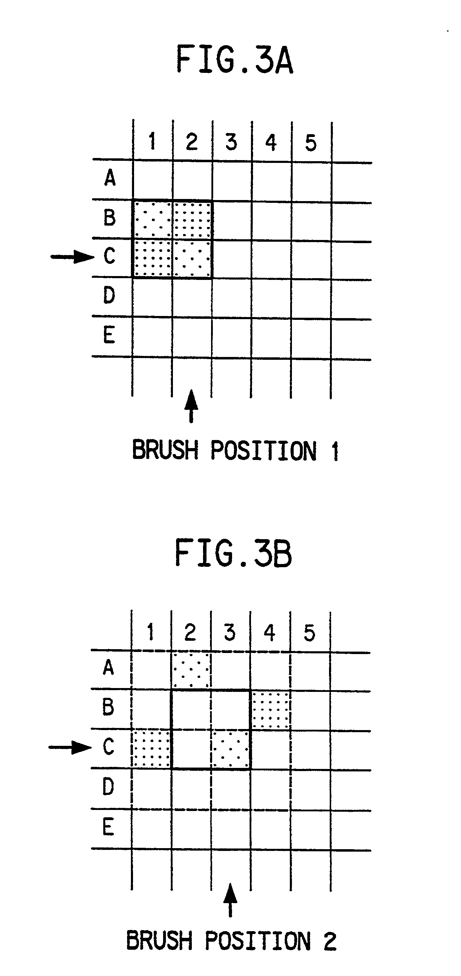

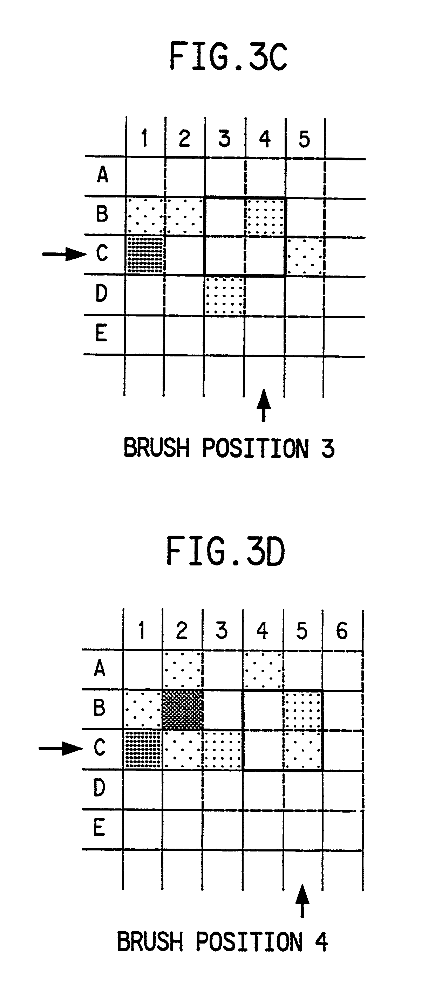

FIGS. 3a through 3d shows a variation of the random effect described above. In this example randomness is limited by choice to variations that modify the shape signal to include pixels surrounding the stylus point, that are no further away than a specified number of pixels, in this case two, and with the further limitation that the pattern be square. One resulting effect may be as shown in the four positions of FIGS. 3a through 3d. First, the shape includes pixels B1/10, B2/30, C1/30 and C2/10. As the stylus is moved to the second position, i.e., from C2 to C3, the original intensity values may be distributed to any four pixels within two pixels from the original pattern of four. If that pixel had a preexisting value from the previous step then the two values will be combined in accordance with the combining algorithm selected.

In this illustration, in the second position, from the possible selection of pixels included in the area within the dashed outline in the FIG. 3b, pixels A2, B4, C1, and C3 have been randomly selected, and given the intensity values 10, 30, 30, and 10, respectively. Since C1 had previously been given a value of 30, its intensity value as the stylus is moved to position 3, becomes 60. The shape signal changes again as the stylus moves to position 3, this time resulting in pixels B2, B4, C5, and D3 having intensity values of 10, 30, 10, and 30 respectively. As the stylus continues to change positions, the intensity distribution continues to change as shown in position 4 and so on, leaving behind a path of randomly modified pixel values in a manner that exhibits a somewhat more controlled effect than the previously described random variation, yet one that still blends well with any background image.

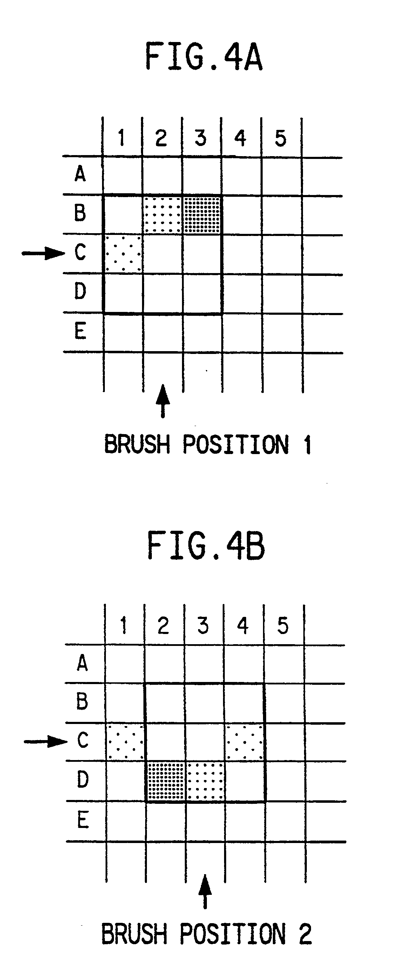

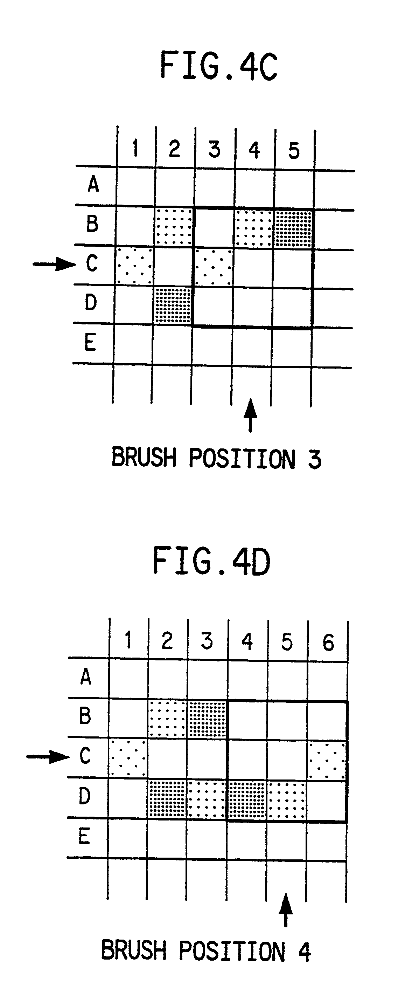

Another interesting effect may be obtained by imposing dithering to the shape. Dithering may be produced by varying the degree of mixing of source pixel intensity value with destination pixel intensity information value, or by a change of the source data location, or the destination data location, or a mixture of the above. FIGS. 4a through 4d describe a dithering effect, by showing the change in the shape signal intensity level. Here the pattern remains constant however the intensity allocation changes as the stylus moves from point to point on the image. Thus in position 1, pixels B2, B3 and C1 are given the intensity level values 30, 40, and 20 respectively. All pixels are encompassed within a 3x3 square that comprises the shape pattern, surrounding the stylus designated point, here pixel C2. In the second position, the stylus has moved to pixel C3 and the new shape allocates intensity value 20, 40, and 30 to pixels C4, D2, and D3 respectively. As the stylus moves to position number 3, pixels B4, B5, and C3 are given the intensity values 30, 40 , and 20 respectively, and so on from position to position.

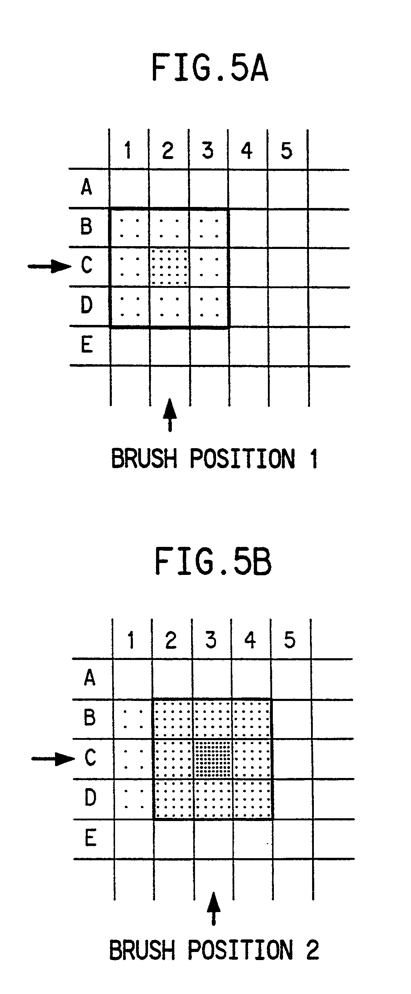

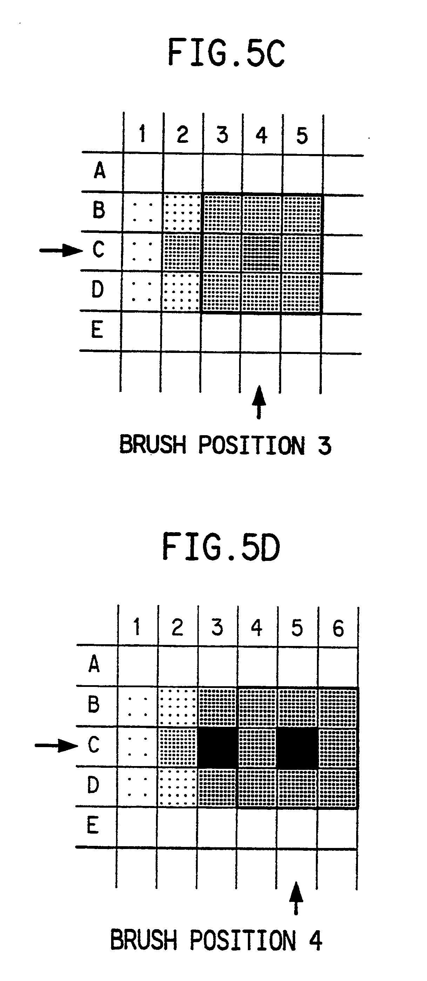

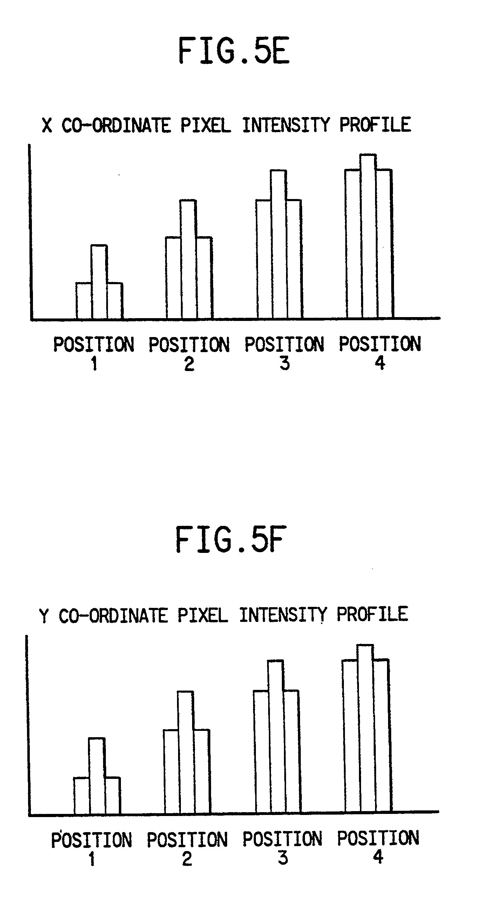

FIGS. 5a through 5f illustrate yet another shape signal variation with change in position. This is particularly effective when used as the stylus is first moved along the tablet, since it creates the effect of a gradual build up of new image density at the beginning of a line. As shown in FIGS. 5a through 5d, the pixel intensity level values within a given pattern of pixels gradually and typically uniformly increase as the stylus moves from position one through position two, then 3 then 4 until a steady state is gradually reached. The pixel intensity level may build up symmetrically in the X and Y directions, as shown diagrammatically in FIGS. 5e and 5f, or it may be asymmetrical. In both instances the effect is one of gradual trace density increase, i.e., attack, along the trace length at the beginning of the trace. With appropriate buffer storage capability, a reverse effect, i.e. decay, effect may be achieved whereby the trace density decreases at the end point, by first determining the end point and then modifying a given number of pixels preceding the end point accordingly to gradually decrease the stored intensity value. In the preferred embodiment, attack and decay are initiated by operator triggering, as the tool is moved.

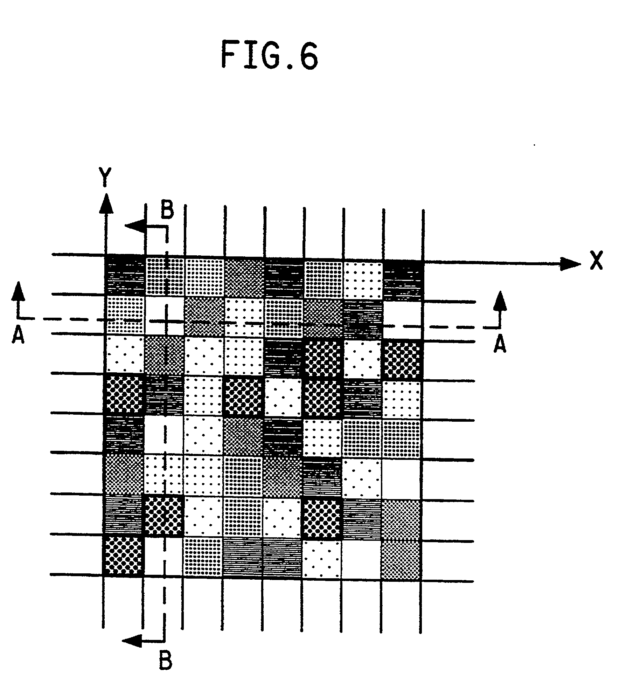

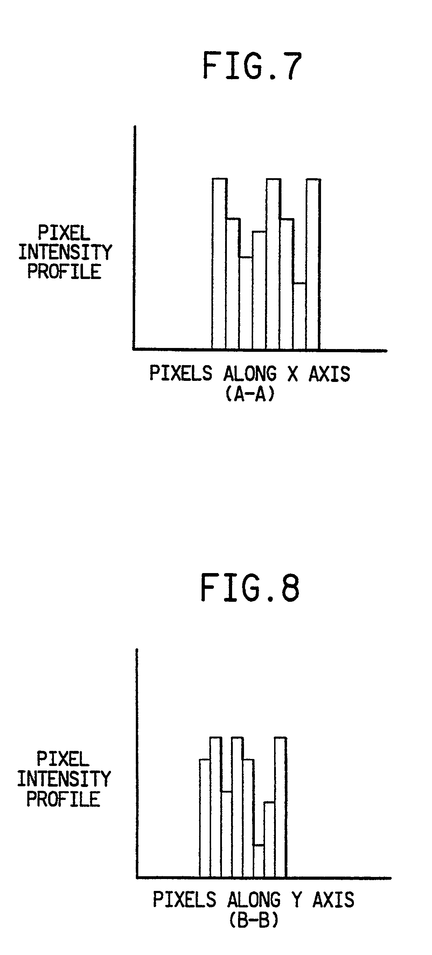

FIG. 6 shows a typical intensity level distribution for pixels in a shape signal situation where a spatter effect is desired. As better shown in FIGS. 7 and 8, the intensity level profile along any row of pixels within the pattern encompassed by the particular shape signal selected is random, producing high and low intensity spots within a batch of image points, somewhat similar to an air brush pattern. To provide a more realistic effect, the intensity value profile may change as the stylus moves from one point on the image to an adjacent point thereon, and the change may be random or in accordance with a desired pattern. Furthermore, the pixel pattern may also vary as the stylus 19 moves for an added effect.

A variation on the above effect maintains a central portion of the shape signal pixel pattern constant in both shape and intensity level, while varying the intensity and, if so desired, the number of pixels peripheral to the central core in a random manner. The result is a lot like a drafting tool that has a central constant core surrounded by a shimmering halo portion.

The intensity level values may be selected by moving the stylus to a specific point on the image and copying the intensity level of the pixels in the pattern of pixels within the selected shape signal at that point.

In the alternative, intensity values may be arbitrary designations using either a menu for selection or a coded input for direct input from the keyboard 10.

Up to this point in the description of this invention no mention of color has been made. However the process and system described above is equally useful in color applications as it is in monochrome. Color simply involves the manipulation of three monochrome signals instead of one, typically one for each of the Red, Green and Blue separations that are used in the display monitor. Whether the color is comprised of color separations such as Magenta, Cyan and Yellow or Red, Green and Blue, the technology for the transformation of one to the other is well known and not the subject of this invention. Each color component may be treated as an independent monochrome case, to which the invention as described above is applicable, or the interdependence of the colors may be taken into consideration where hue transformation, tint, and snap color brushes are emulated. It is preferred that when a colored image is being altered or created that the shape signal and instructions selected be identical for all three components, unless special color effects are desired, in which instance independent variations for each of the three colors may be used, with resulting tone and hue variations, in addition to the form and intensity of each trace.

A number of specific types of shape signal variations have been mentioned, however these examples are not to be viewed as limiting the invention to the enumerated embodiments only. Those having the benefit of the disclosure hereinabove set forth will conceive of numerous other shape signal variations as a function of the stylus movement along the image. Effects such as smearing of the underlying image are within such scope. Also within the scope of the invention are other brush variations such as changing the source image pixels (i.e., the pixels that supply the shape signal before the tool shifts position) as a function of operator movement. Again, the manner in which the color is varied by changing the shape signal as a function of movement, and the process for implementing such variations may be controlled in accordance with the scope of this invention, as are other variations all encompassed within the scope of the present invention.

## Claims

1.  An image editing system including a drafting tool operable by an operator to designate picture elements on a desired image, said drafting tool adapted to be moved by the operator from a first position in the image to a second position also in the image, the system having means coupled to the drafting tool for providing electronic shape signals having different values and representing a plurality of picture elements to simulate a characteristic of the drafting tool, characterised in that the system comprises:

means coupled to the providing means for changing said shape signals in response to the movement of said tool from said first position to said second position, said changing means being coupled to input signals preselected by the operator from a library of available selectable instructions.

2. A system according to Claim 1, further comprising a memory store for picture element signals having storage locations representing picture elements of the desired image, and signal processing means coupled to both the providing means and the memory store for producing for each picture element designated by the drafting tool a new picture element signal which is a function of the shape signal and of a previous picture element signal for the same picture element derived from the location in the memory store corresponding to the respective picture element.

3. A system according to Claim 2, further comprising means coupled to the store armory for displaying an image corresponding to the stored picture element signals.

4. A system according to Claim 1, 2, or 3, wherein the changing means further includes means coupled to the providing means for receiving and storing the shape signals provided therefrom, and means for combining the stored shape signals with subsequent shape signals changed in response to the movement of the tool form the second position to a third position.

5. A system according to Claim 4 wherein the combining means includes means for combining preselected portions of the stored and subsequent shape signals.

6. A system according to any preceding Claim, wherein the shape signals comprise a pattern signal representing the picture elements included in a particular pattern, and an intensity level signal representing the brightness level of each picture element in the pattern.

7. A system according to Claim 6, wherein both the pattern signal and the intensity level signal change in a random manner.

8. A system according to Claim 6, wherein the intensity level signal remains constant and the pattern signal changes in a random manner.

9. A system according to Claim 6, wherein the pattern signal remains constant and the intensity level signal changes in a random manner.

10. A system according to Claim 6, wherein the pattern signal changes in a limited random manner wherein only picture elements within a preselected number of elements from a picture element within an original pattern of picture elements, are utilized in randomly changing the pattern signal.

11. A system according to Claim 6, wherein the intensity level signal increases gradually and continuously from an initial intensity level value to a final intensity level value as each shape signal changes.

12. A system according to Claim 6, wherein the intensity level signal decreases gradually and continuously from an initial level value as each shape signal changes.

13. A system according to Claim 6, wherein the pattern signal changes symmetrically around a preselected picture element to produce a dithering effect.

14. A system according to Claim 6 wherein the pattern signal remains constant, and wherein the intensity level signal changes symmetrically around a preselected picture element to produce a dithering effect.

15. A system according to Claim 6, wherein the shape signals remain constant for a central portion of the picture elements, and wherein the intensity level signal for picture elements peripheral to the central portion change in a random manner.

16. A system according to Claim 15, wherein the pattern signal for picture elements peripheral to the central portion also change in a random manner.

17. An image editing system for use with an image display device, comprising: a drafting tool movable to designate different positions in an image; and means for generating signals representative of a characteristic effect of said tool on said image, characterised in that said characteristic effect changes automatically either randomly or in a predetermined sequence in response to changes in the image position designated by said tool.

# FIG.1

OPERATOR SELECTED FUNCTIONS — 10

SIGNAL CHANGING MEANS — 11

SHAPE SELECTION — 12

13

PROCESSOR — 14

ADDRESS GENERATOR

16

DRAWING TOOL — 19, 18, 17

DISPLAY — 22

STORE MEMORY — 20

EP 0 454 477 A2

# FIG.2A

BRUSH POSITION 1

# FIG.2B

BRUSH POSITION 2

## FIG.2C

BRUSH POSITION 3

## FIG.2D

BRUSH POSITION 4

# FIG.3A

BRUSH POSITION 1

# FIG.3B

BRUSH POSITION 2

# FIG.3C

BRUSH POSITION 3

# FIG.3D

BRUSH POSITION 4

# FIG.4A

BRUSH POSITION 1

# FIG.4B

BRUSH POSITION 2

# FIG.4C

BRUSH POSITION 3

# FIG.4D

BRUSH POSITION 4

# FIG.5A

BRUSH POSITION 1

# FIG.5B

BRUSH POSITION 2

# FIG.5C

BRUSH POSITION 3

# FIG.5D

BRUSH POSITION 4

# FIG.5E

X CO-ORDINATE PIXEL INTENSITY PROFILE

POSITION  POSITION  POSITION  POSITION
    1         2         3         4

# FIG.5F

Y CO-ORDINATE PIXEL INTENSITY PROFILE

POSITION  POSITION  POSITION  POSITION
    1         2         3         4

# FIG.6

# FIG.7

PIXEL
INTENSITY
PROFILE

PIXELS ALONG X AXIS
(A–A)

# FIG.8

PIXEL
INTENSITY
PROFILE

PIXELS ALONG Y AXIS
(B–B)